# EUROPEAN PATENT SPECIFICATION

(11) **EP 4 129 070 B1**
(45) Date of publication and mention of the grant of the patent: **30.04.2025**
(21) Application number: 20894947.9
(22) Date of filing: 30.03.2020
(51) Int. Cl.: A22C 17/00

(54) **BONE REMOVAL DEVICE AND BONE REMOVAL METHOD**
VORRICHTUNG UND VERFAHREN ZUR KNOCHENENTFERNUNG
DISPOSITIF D'ÉLIMINATION D'OS ET PROCÉDÉ D'ÉLIMINATION D'OS

(43) Date of publication of application: 08.02.2023
(73) Proprietor: Mayekawa Mfg. Co., Ltd., Koto-ku Tokyo 135-8482 (JP)
(72) Inventor: TANIGUCHI, Akira, Tokyo 135-8482 (JP); MATSUMOTO, Kousuke, Tokyo 135-8482 (JP); SAKURAYAMA, Hiroyuki, Tokyo 135-8482 (JP); GOTO, Osamu, Tokyo 135-8482 (JP)
(74) Representative: Zimmermann, Tankred Klaus
(86) International application number: PCT/JP2020/014511
(87) International publication number: WO 2021/199140

(56) References cited:
- EP-A1- 0 590 733
- EP-A1- 2 826 378
- WO-A1-2005/053412
- WO-A1-91/11912
- WO-A2-01/82706
- DE-A1- 2 227 369
- JP-A- 2008 099 574
- US-A- 5 868 613

## Description

### TECHNICAL FIELD

The present invention relates to a bone removing device and a bone removing method of removing a bone to be removed such as a scapula from a meat block such as a pork block.

### BACKGROUND ART

Since the operation of removing a bone to be removed, such as a scapula, from a meat block such as a pork block requires skill and is hard operation, automation is required.

JP 4 327 099 A shows an example of a conventional bone removing device and, in this bone removing device, a constriction portion of a scapula is gripped by a portal chuck and the scapula is peeled off while a pork block is suspended and conveyed by a clamper.

WO 2005/ 053 412 A discloses a method and a device for detaching a bone part from a carcass part. EP 2 826 378 A1 discloses a scapula removal device and method for meat on the bone, and debonding system for meat on the bone equipped with said device. EP 0 590 733 A1 discloses a method and a device for debonding leg pieces of slaughtered animals. DE 22 27 369 A1 discloses a device for the automatic removal of bones from meat, in particular from ham. WO 01/ 82 706 A2 discloses a meat debonding apparatus and a method. WO 91/ 11 912 A1discloses an apparatus for removing a bone from a piece of meat lying upon a horizontal supporting surface.

### SUMMARY OF INVENTION

### Technical Problem

In order to realize the device of JP 4 327 099 A, it was necessary to perform operations of photographing a pork block suspended from a clamper by X-ray, measuring a position of a bone in the pork block in an image analysis, bending the pork block in accordance with the position of the bone, gripping a scapula using a hand tool attached to a tip of a robot, and peeling off the scapula from the pork block.

As described above, in the device of JP 4 327 099 A, since it is necessary to control the operation according to the shape of the pork block or the arrangement of the bones in the suspended state with a high degree of freedom of posture, the position of the bone needs to be measured by X-ray photographing. However, X-ray transmission may be insufficient and bone position measurement by image analysis may not be performed accurately depending on the thickness of meat of the pork block.

Further, when the shape or size of the pork block is different from the usual one or when it is a soft pork block having meat softer than the usual one, the pork block cannot be bent properly according to the position of the bone or the position of the scapula is displaced so that the robot's hand tool cannot accurately grip the scapula in some cases. In such a case, it takes time and effort for an operator to manually adjust each part of a machine so that the bone removing operation can be smoothly performed.

An object of the present invention is to provide a bone removing device and a bone removing method capable of stably performing a bone removing operation even when the shape, size, and softness of a meat block are different.

### Solution to Problem

[1] An aspect of the present invention is a bone removing device for removing a bone (as a part of the bone to grip, for example, a bone having a constriction portion or a bone head, for example, a scapula) to be removed from a meat block (for example, a pork block such as a pork arm block) including: a transfer mechanism which transfers a meat block from an upstream side to a downstream side; a grip mechanism which includes first and second grip portions and an open-and-close actuator opening and closing a gap between the first and second grip portions and introduces a part of the bone in the meat block into the gap between the first and second grip portions; and a drive mechanism which moves the grip mechanism so that the bone partially gripped by the grip mechanism is peeled off from the meat block. The bone removing device further comprises a guide mechanism which includes first and second guide portions arranged along the transfer mechanism with a gap therebetween and guides a part of the bone in the meat block conveyed by the transfer mechanism to a gap between the first grip portions and the second grip portions through the gap.

In this bone removing device, the meat block is placed and conveyed on the transfer mechanism so that a part of the bone in the meat block is introduced into the gap between the first grip portion and the second grip portion. When the part of the bone enters into the gap between the first grip portion and the second grip portion, the drive mechanism moves the grip mechanism and peels off the bone from the meat block.

Thus, according to this bone removing device, since the part of the bone is stably introduced into the gap between the first grip portion and the second grip portion in such a manner that the meat block is placed and conveyed on the transfer mechanism, a bone removing operation can be stably performed even when the shape, size, and softness of the meat block are different. The moving direction of the grip mechanism may be any direction if the bone can be peeled off from the meat block. For example, the moving direction may be a direction away from the transfer mechanism.

[2] In the device of the above [1], the drive mechanism may include a pressing mechanism which includes a pressing body disposed closer to the transfer mechanism than the first grip portion and the second grip portion and a pressing actuator moving the pressing body toward the transfer mechanism and presses the meat block by the pressing body when peeling off the bone from the meat block.

In this case, since the meat block is pressed against the transfer mechanism by the pressing body when the grip mechanism is moved by the drive mechanism so that the bone is peeled off from the meat block, the meat block does not lift when peeling off the bone. As a result, there is an advantage that a stable peeling operation can be performed. Further, since the pressing body presses the meat block against the transfer mechanism, the position or shape of the meat block can also be standardized. This point also contributes to the stabilization of processing. The pressing body may be used to press the bone head of the bone remaining in the meat block. In that case, since the hard bone head is pressed, the meat block can be effectively fixed.

In this case, when the meat block is placed on the transfer mechanism and a part of the bone of the meat block is disposed through the gap between the first guide portion and the second guide portion, the meat block moves while the part of the bone is guided through the gap between the first guide portion and the second guide portion by the conveying operation using the transfer mechanism and the part is introduced into the gap between the first grip portion and the second grip portion.

Thus, according to this bone removing device, since the part of the bone is stably introduced into the gap between the first grip portion and the second grip portion by the guidance of the first guide portion and the second guide portion, a bone removing operation can be more stably performed even when the shape, size, and softness of the meat block are different.

[4] In the device of the above [1] to [3], the drive mechanism may include a vertical actuator which moves the grip mechanism in a direction perpendicular to a conveying surface of the transfer mechanism and a horizontal actuator which moves the grip mechanism in a width direction of the transfer mechanism.

In this case, since the operation of the grip mechanism is a moving direction and a moving speed which is a combination of the ascent by the vertical actuator and the horizontal movement in the width direction of the transfer mechanism by the horizontal actuator, an efficient bone peeling operation according to the combination characteristics of the bone and the meat block can be performed. As a result, stable processing can be performed without damaging the meat by peeling the meat or breaking the bones during peeling.

[5] In the device of the above [4], the drive mechanism may include a controller which programs a movement locus of the grip mechanism in a virtual plane orthogonal to a conveying direction of the transfer mechanism in advance by controlling a moving speed of each of the vertical actuator and the horizontal actuator.

In this case, since the movement locus of the grip mechanism in the virtual plane and the speed at each position can be programmed in advance by the controller, an efficient bone removing process according to the characteristic of the meat block can be performed. The controller includes an input unit for inputting the shape or size of the meat block and may change the movement locus of the grip mechanism in the virtual plane orthogonal to the conveying direction of the transfer mechanism in response to the signal from the input unit. The signal from the input unit may be an output from a sensor that measures the shape or size of the meat block conveyed by the transfer mechanism or a signal selected by a switch or the like switched by the determination of the operator.

[6] The device of the above [3] may further include: a guide position adjustment mechanism which adjusts a height of each of the first guide portion and the second guide portion from the transfer mechanism; and a grip position adjustment mechanism which adjusts a height of each of the first grip portion and the second grip portion from the transfer mechanism.

In this case, for example, even when the shape or size of the meat block is different beyond the allowable range, the heights of the first guide portion and the second guide portion from the transfer mechanism can be adjusted by the guide position adjustment mechanism and the heights of the first grip portion and the second grip portion from the transfer mechanism can be adjusted by the grip position adjustment mechanism. Accordingly, a stable bone removing operation can be performed even when the shape or size of the meat block is different in a wider range.

[7] In the device of the above [3] or [6], the first guide portion may be located at a position closer to the transfer mechanism than the second guide portion and an upstream end of the first guide portion may be provided with a guide bar extending toward an upstream side in relation to the second guide portion.

In this case, when a part of the bone is placed on the guide bar, the part of the bone slides along the guide bar and is smoothly guided into the gap between the first guide portion and the second guide portion. Thus, there is an advantage that a bone removing operation can be more smoothly performed.

[8] In the device of any one of the above [3], [6], and [7], the transfer mechanism may include a first conveyor, a second conveyor, and a third conveyor which are arranged from an upstream side toward a downstream side and are respectively independently operable, the first guide portion and the second guide portion may be arranged along the second conveyor, and the first grip portion and the second grip portion may be arranged along the third conveyor.

In this case, since the conveying timing of the meat block is adjusted by the first conveyor, the delivery timing from the first guide portion and the second guide portion to the first grip portion and the second grip portion is adjusted by the second conveyor, and the position and timing of the peeling operation are adjusted by the third conveyor, it is easy to harmonize each operation at the optimum timing.

[9] The device of any one of the above [3], [6], [7], and [8] may further include: a guide gap adjustment mechanism which adjusts a distance of a gap between the first guide portion and the second guide portion; and a grip gap adjustment mechanism which adjusts a distance of a gap between the first grip portion and the second grip portion.

In this case, for example, even when the thickness or size of the bone of the meat block is different beyond the allowable range, the guide gap adjustment mechanism and/or the grip gap adjustment mechanism is operated to adjust the distance of the gap between the first guide portion and the second guide portion and/or the distance of the gap between the first grip portion and the second grip portion. Accordingly, even when the shape or size of the meat block is different in a wider range, a stable bone removing operation can be performed.

[10] The device of any one of the above [3], [6], [7], [8], and [9] may further include: a second guide turning mechanism which includes a turning shaft disposed in parallel to the first guide portion and an arm supporting the second guide portion to be turned around the turning shaft.

In this case, the gap between the first guide portion and the second guide portion can be widened by turning the second guide portion around the turning shaft using the second guide turning mechanism and the maintenance can be easily performed.

[11] Another aspect of the present invention is a bone removing method of removing a bone to be removed from a meat block including: conveying a meat block from an upstream side to a downstream side by a transfer mechanism transferring the meat block; introducing a part of the bone in the meat block into a gap between a first grip portion and a second grip portion; and peeling off the bone from the meat block by moving the first grip portion and the second grip portion gripping the part of the bone in the gap. The method further comprises guiding a part of the bone conveyed by the transfer mechanism to the gap between the first grip portions and the second grip portions through a gap between a first guide portion and a second guide portion disposed along the transfer mechanism.

In this bone removing method, the meat block is placed and conveyed on the transfer mechanism and a part of the bone in the meat block is introduced into the gap between the first grip portion and the second grip portion. When the part of the bone enters the gap between the first grip portion and the second grip portion, the drive mechanism moves the grip mechanism in a direction away from the transfer mechanism and peels off the bone from the meat block.

Thus, according to the bone removing method, since the part of the bone is stably introduced into the gap between the first grip portion and the second grip portion in such a manner that the meat block is placed and conveyed on the transfer mechanism, a bone removing operation can be stably performed even when the shape, size, and softness of the meat block are different.

According to this method, since the part of the bone is stably introduced into the gap between the first grip portion and the second grip portion by the guidance of the first guide portion and the second guide portion, a bone removing operation can be stably performed even when the shape, size, and softness of the meat block are different.

[13] In the device of the above [1] to [10] and the method of the above [10] to [13], the meat block may be a pork block of a pork shoulder meat, the bone may be a scapula, and the part of the bone may be a part just below the bone head of the scapula. However, the present invention is not limited to the pork shoulder meat and pork blocks and may be meat blocks of other animals. Further, the bone is not limited to the scapula and any bone having a part at the end can be similarly applied.

Further, as in the embodiments described later, the configurations of the above-described devices [1] to [10] and methods [11] and [12] can be combined with each other. Advantageous Effects of Invention

According to the bone removing device and the bone removing method of the present invention, since the part of the bone is stably introduced into the gap between the first grip portion and the second grip portion in such a manner that the meat block is placed and conveyed on the transfer mechanism, there is an excellent effect that a bone removing operation can be stably performed even when the shape, size, and softness of the meat block are different.

### BRIEF DESCRIPTION OF DRAWINGS

Fig. 1 is a perspective view of a bone removing device according to an embodiment of the present invention.
Fig. 2 is a perspective view showing a conveyor (transfer mechanism) of the bone removing device.
Fig. 3 is a front view showing a guide mechanism, a grip mechanism, and a drive mechanism of the bone removing device.
Fig. 4 is a perspective view showing the guide mechanism of the bone removing device.
Fig. 5 is a side view showing the guide mechanism of the bone removing device.
Fig. 6 is a side view showing the grip mechanism and the drive mechanism of the bone removing device.
Fig. 7 is a perspective view showing the grip mechanism and the drive mechanism of the bone removing device.
Fig. 8 is a perspective view showing the grip mechanism and the drive mechanism of the bone removing device.
Fig. 9 is a side view showing a state in which the guide mechanism of the bone removing device is opened.
Fig. 10 is a side view showing a state in which, for example, a constriction portion corresponding to a part of a bone is guided by the guide mechanism of the bone removing device.
Fig. 11 is a side view showing a state in which the constriction portion is gripped by the grip mechanism of the bone removing device.
Fig. 12 is a side view showing a state in which the constriction portion is gripped by the grip mechanism of the bone removing device and a meat block is pressed by a pressing body.
Fig. 13 is a side view showing a state in which a scapula is peeled off by the grip mechanism of the bone removing device.
Fig. 14 is a side view showing a state in which the scapula is released by the grip mechanism of the bone removing device.
Fig. 15 is a graph showing an example of a movement locus of the grip mechanism when the bone removing device peels off the scapula.
Fig. 16 is a flowchart showing an example of an operation of the bone removing device.
Fig. 17 is a plan view showing an example of a meat block from which a bone is removed by the bone removing device.
Fig. 18 is a side view showing an example of a meat block from which a bone is removed by the bone removing device.

### DESCRIPTION OF EMBODIMENTS

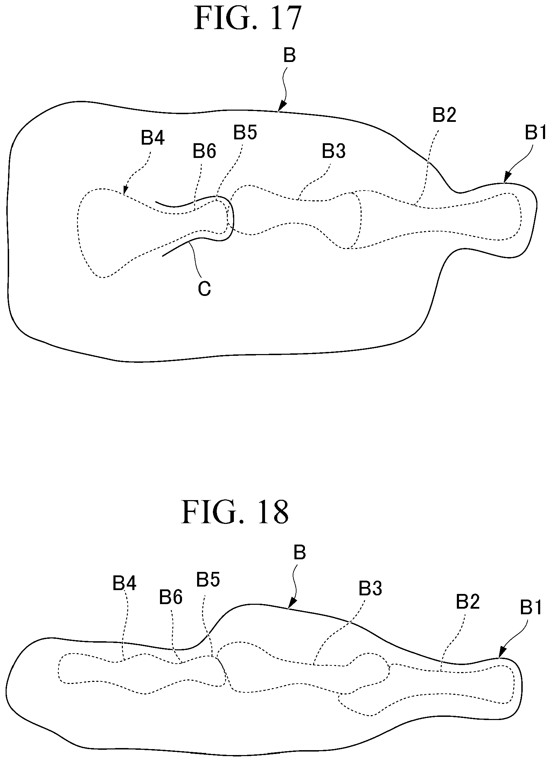

Hereinafter, an embodiment of the present invention will be described with reference to the drawings. In this embodiment, for example, a meat block B shown in Figs. 17 and 18 is processed. This meat block B is a pork shoulder meat block in which shoulder loin and spare ribs are removed from a half-back block of a pork carcass, has a wrist side B1 at one end, and includes a forearm bone B2, an humerus B3, and a scapula B4. The scapula B4 has a bulging bone head B5 at one end, the other end extends in a triangular shape, and a portion just below the bone head B5 is a constriction portion B6 with a narrow diameter. A bone removing device 1 of this embodiment is used to grip the constriction portion B6 as a part of the bone and peel that part off from the meat block B. As a pretreatment for the bone removing device 1, it is necessary to cut a circumference C of the bone head B5 and the constriction portion B6 with a knife to expose the bone head B5 and the constriction portion B6. However, the present invention is not limited to the pork shoulder meat and pork blocks and may be meat blocks of other animals. The bone is not limited to the scapula and the present invention can be applied to any other bone as well. A "part" of the bone to be gripped may be the constriction portion or the bone head and the present invention can be applied to one end or the center portion of the bone as well.

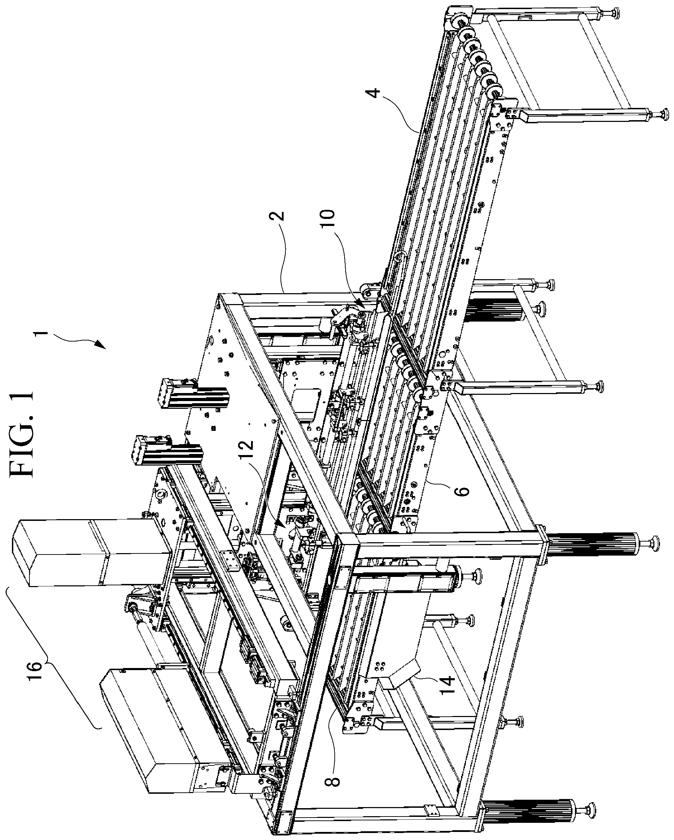

Fig. 1 shows the bone removing device 1 according to an embodiment of the present invention and this bone removing device 1 has a rectangular parallelepiped frame 2 and a first conveyor 4, a second conveyor 6, and a third conveyor 8 arranged horizontally in a row, respectively. The first conveyor 4, the second conveyor 6, and the third conveyor 8 constitute a transfer mechanism. The first conveyor 4 is disposed outside the frame 2 and the second conveyor 6 and the third conveyor 8 are disposed inside the frame 2. The first conveyor 4, the second conveyor 6, and the third conveyor 8 can be individually operated and all meat blocks are conveyed from the upstream side (the right side in Fig. 1) to the downstream side (the left side in Fig. 1). Inside the frame 2, a guide mechanism 10 is disposed above the second conveyor 6 and a grip mechanism 12 for gripping the scapula B4 is disposed above the third conveyor 8. A drive mechanism 16 for driving the grip mechanism 12 is disposed on the upper surface of the frame 2. Hereinafter, these configurations will be described in detail.

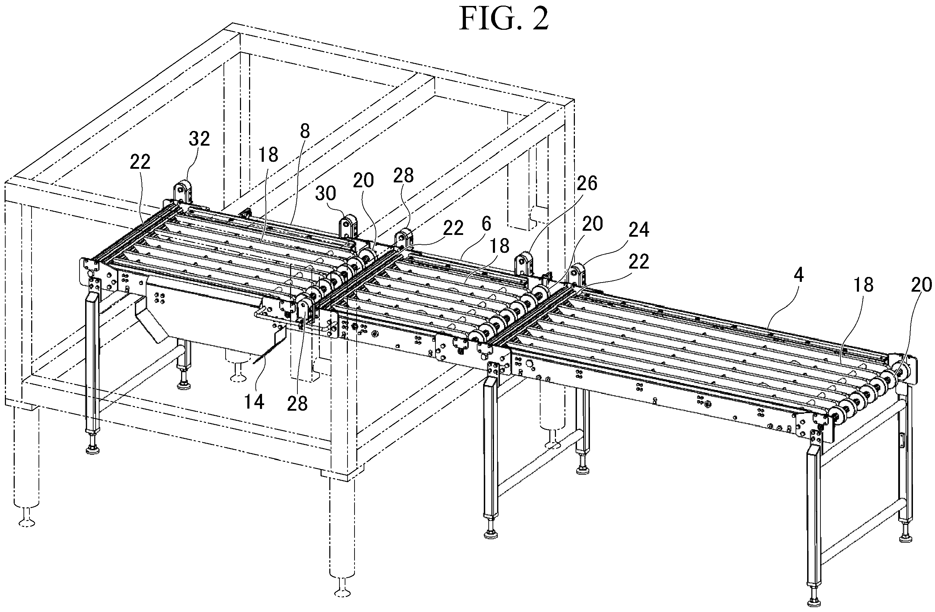

Fig. 2 shows the first conveyor 4, the second conveyor 6, and the third conveyor 8 and all of these conveyors include a plurality of support plates 18 extending in a conveying direction and rollers 20 and 22. An endless roller belt (not shown) is wound on the rollers 20 and 22 so that the roller belt runs. The roller belt is periodically replaced and cleaned.

A distance sensor 24 is installed at the end of the first conveyor 4, a distance sensor 26 is installed at the tip of the second conveyor 6, and a pair of passage sensors 28 is installed at the end of the second conveyor 6. A distance sensor 30 is installed at the tip of the third conveyor 8 and a distance sensor 32 is installed at the end thereof. When the meat block B passes immediately before the distance sensors 24, 26, 30, and 32, the distance sensors measure the distance from the meat block B and detect that the meat block B has passed in a normal posture. The passage sensor 28 detects the passage of the meat block B regardless of the posture of the meat block B. These sensors are connected to a control panel (not shown) and their signals are used for the operation control described later. A guide 14 is fixed to the side surface of the third conveyor 8 to receive the scapula B4 removed from the meat block B and guide the scapula to a container (not shown).

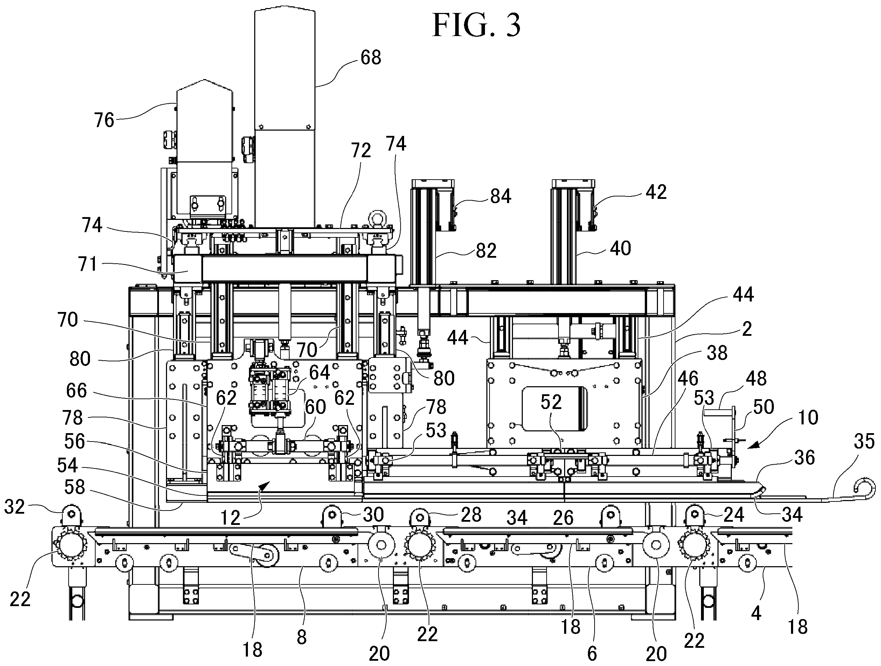

Fig. 3 shows a relationship between the conveyors 4, 6, and 8, the guide mechanism 10, and the grip mechanism 12. First and second guide portions 34 and 36 having an elongated rail shape are disposed above the second conveyor 6 so that their longitudinal directions are parallel to the conveyor conveying direction. The first guide portion 34 is located lower than the second guide portion 36. The first guide portion 34 and the second guide portion 36 have substantially the same length, but a guide bar 35 is attached to the tip on the upstream side of the first guide portion 34. The guide bar 35 extends in the extension direction of the first guide portion 34 and the tip is rounded in a loop for safety. The guide bar 35 is guided to allow an operator to place the constriction portion B6 of the meat block B thereon so that the constriction portion B6 is smoothly introduced between the first guide portion 34 and the second guide portion 36.

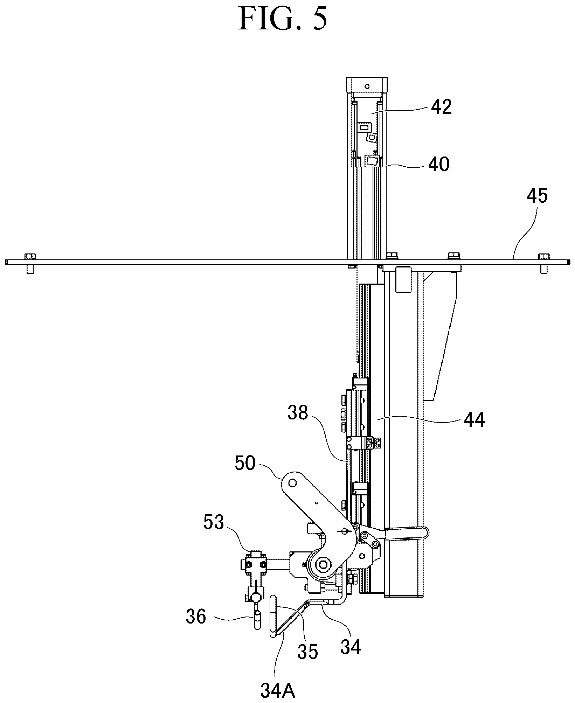

As shown in Fig. 5, there is a gap of almost the same distance over the entire length between a lower end 34A of the first guide portion 34 and a lower end of the second guide portion 36 and the constriction portion B6 of the scapula B4 in the meat block B conveyed by the second conveyor 6 is sandwiched and guided through the gap. The gap between the first guide portion 34 and the second guide portion 36 is set to be slightly larger than the thickness of the constriction portion B6 and smaller than the diameter of the bone head B5 of the scapula B4. Accordingly, the constriction portion B6 is not pulled out and is smoothly guided over the entire length of the first guide portion 34 and the second guide portion 36. The lower ends of the first guide portion 34 and the second guide portion 36 are rounded not to damage the meat.

As shown in Fig. 5, a lower end 34A of the first guide portion 34 is inclined to be lowered as it goes toward the second guide portion 36 and supports a lower surface of the constriction portion B6. An upper end of the first guide portion 34 erects perpendicularly and a horizontal rotation shaft 46 is attached to a front surface thereof to be rotatable around the axis. The second guide portion 36 is attached to the rotation shaft 46 through a plurality of arms 53 and the second guide portion 36 is opened and closed with respect to the first guide portion 34 when the rotation shaft 46 rotates. The arm 53 has a function of finely adjusting the height and angle of the second guide portion 36.

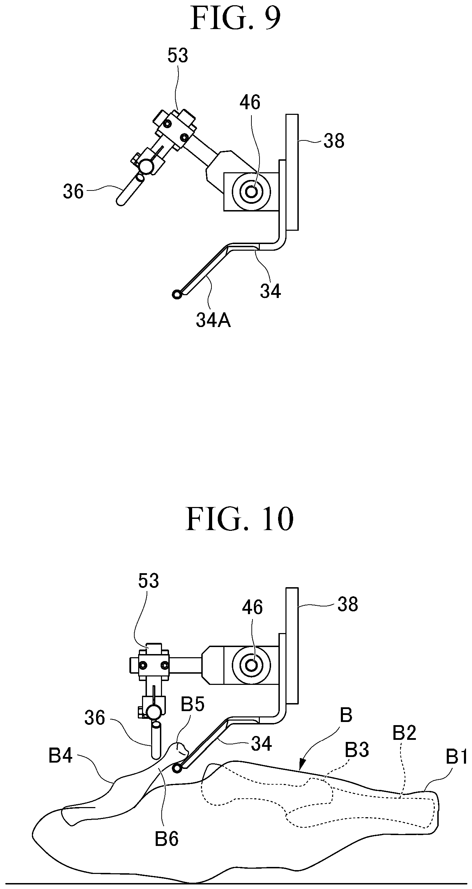

A handle 48 is fixed to an end of the rotation shaft 46 through a lever 50 and when the operator moves the handle 48, the second guide portion 36 moves to a jumping-up position and can be fixed at the jumping-up position as shown in Fig. 9. Even when the second guide portion 36 jumps up in this way, there is an advantage that the guide mechanism 10 can be easily washed.

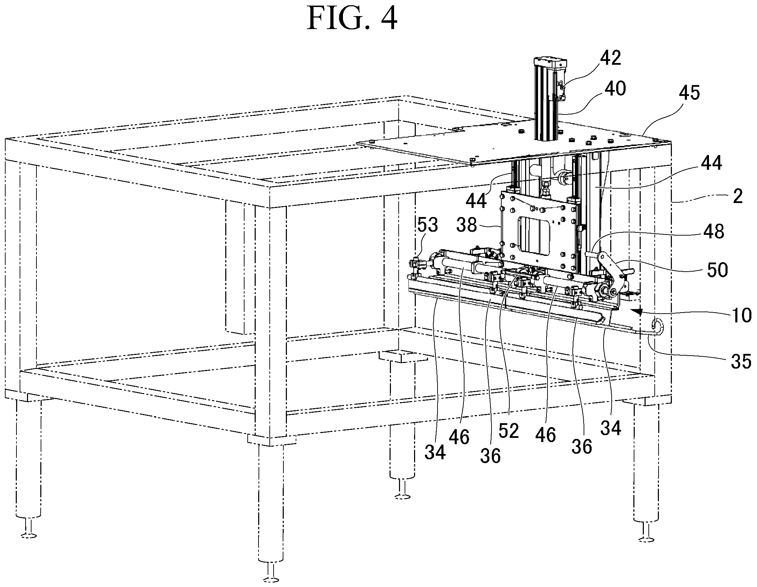

As shown in Fig. 4, the upper end of the first guide portion 34 is fixed to a lifting plate 38 disposed perpendicularly and the lifting plate 38 is supported to be elevatable through a pair of linear guides 44 attached to the frame 2. A horizontal plate 45 is fixed onto the frame 2, a lifting unit 40 is provided thereon, and the lifting plate 38 can be elevated to an arbitrary position by a servo motor 42. The servo motor 42 is connected to a switch and a control panel (not shown) and can adjust the height positions of the first guide portion 34 and the second guide portion 36 in accordance with the shape or size of the meat block B in such a manner that the operator manipulates the switch or operates the servo motor 42 using the control panel.

As shown in Fig. 3, the grip mechanism 12 includes a first grip portion 54 and a second grip portion 56 which are disposed on the downstream side of the first guide portion 34 and the second guide portion 36 and an open-and-close actuator 64 which opens and closes a gap between the first grip portion 54 and the second grip portion 56. The longitudinal directions of the first grip portion 54 and the second grip portion 56 are substantially aligned to the longitudinal directions of the first guide portion 34 and the second guide portion 36 and the constriction portion B6 guided by the first guide portion 34 and the second guide portion 36 is smoothly received in the gap between the first grip portion 54 and the second grip portion 56. The cross-sections of the lower ends of the first grip portion 54 and the second grip portion 56 are rounded not to damage the meat.

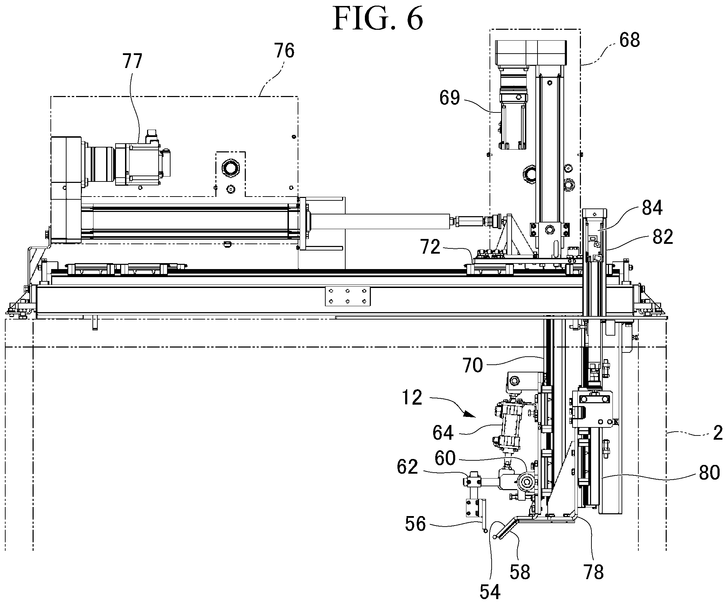

As shown in Fig. 6, a lower end 54A of the first grip portion 54 is inclined downward as it goes toward the second grip portion 56 and supports the lower surface of the constriction portion B6. An upper end of the first grip portion 54 erects perpendicularly and is fixed to a lifting plate 66 extending perpendicularly. The lifting plate 66 is attached to the frame 2 through a pair of linear guides 70 to be elevatable.

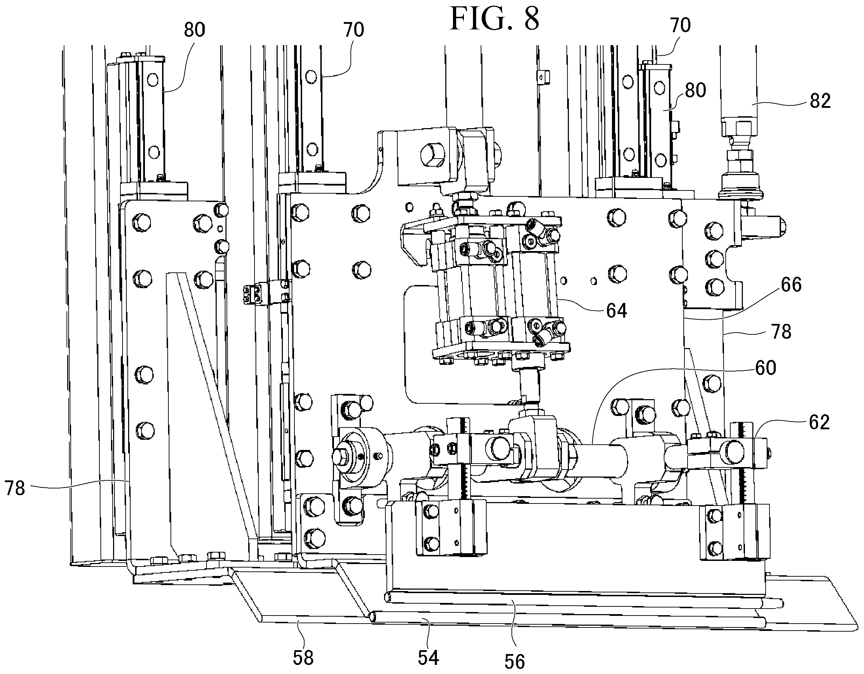

As shown in Fig. 8, a horizontal rotation shaft 60 is attached to an entire surface of a lower end of the lifting plate 66 to be rotatable around the axis. The second grip portion 56 is attached to both ends of the rotation shaft 60 through a pair of arms 62 and the second grip portion 56 is opened and closed with respect to the first grip portion 54 when the rotation shaft 60 rotates. The arm 62 has a function of finely adjusting the height and angle of the second grip portion 56. A shaft of the open-and-close actuator 64 is eccentrically connected to the center of the rotation shaft 60 and the main body of the open-and-close actuator 64 is fixed to the lifting plate 66. When the open-and-close actuator 64 is operated, the rotation shaft 60 rotates so that the second grip portion 56 is opened and closed with respect to the first grip portion 54. At the closed position of the second grip portion 56, the constriction portion B6 is elastically sandwiched and fixed between the second grip portion 56 and the first grip portion 54 with a constant force. The open-and-close actuator 64 is connected to a control panel (not shown).

As shown in Fig. 3, a horizontal frame 71 is fixed to an upper surface of the frame 2, a slide stand 72 is horizontally disposed on the horizontal frame 71 through a linear guide 74, and the slide stand 72 is movable in the width direction of the third conveyor 8. A vertical actuator 68 including a servo motor 69 is attached onto the slide stand 72 and the shaft is connected to the lifting plate 66.

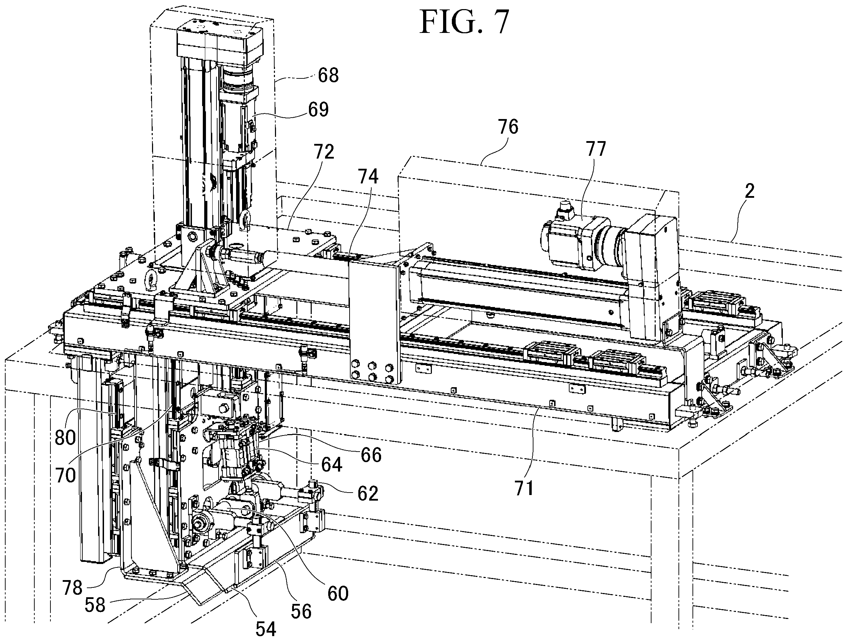

As shown in Fig. 7, a shaft of a horizontal actuator 76 including a servo motor 77 is connected to the slide stand 72 and the horizontal actuator 76 is fixed to the horizontal frame 71. The vertical actuator 68 and the horizontal actuator 76 are respectively connected to the control panel and the movement locus of the grip mechanism 12 in the virtual plane orthogonal to the conveying direction of the conveyor and the speed at each point can be programmed in advance by controlling the moving speed of each of the vertical actuator 68 and the horizontal actuator 76.

As shown in Fig. 8, a long and thin plate-shaped pressing body 58 is disposed on a lower surface of the lower end 54A of the first grip portion 54. The pressing body 58 has a shape extending substantially in parallel to the lower surface of the lower end 54A and has a length extending to the upstream side and the downstream side from the first grip portion 54 and the second grip portion 56. As shown in Fig. 3, an upstream end of the pressing body 58 extends to below a downstream end of the first guide portion 34.

Each of both ends of the pressing body 58 is connected to a lower end of the lifting body 78 and the lifting body 78 is supported by a pair of linear guides 80 fixed to the frame 2 to be elevatable. A shaft of a pressing mechanism 82 driven by a servo motor 84 is connected to the lifting body 78 and the pressing mechanism 82 is fixed onto the frame 2. When the servo motor 84 is operated, the pressing body 58 can be elevated from a position contacting the lower surface of the lower end 54A of the first grip portion 54 to a position in which the meat block B disposed on the third conveyor 8 is pressed against the third conveyor 8.

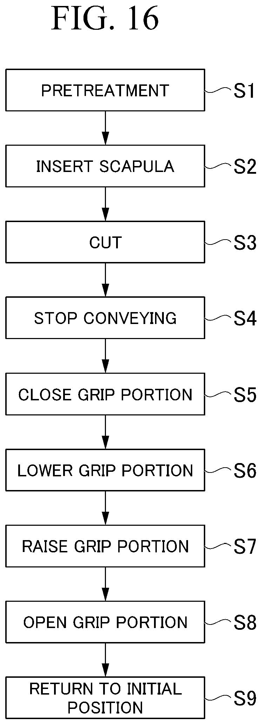

Next, a bone removing method using the bone removing device 1 will be described. This method is to repeat step S1 to step S9 for each meat block B according to the flowchart of Fig. 16, the following operation is programmed in advance in the above-described control panel (not shown), and the bone removing device 1 automatically performs step S3 to step S9 except for step S1 and step S2. Hereinafter, each step will be described sequentially.

In step S1, the operator performs pretreatment for introducing the meat block B into the bone removing device 1. As shown in Figs. 17 and 18, a pork shoulder meat block in which shoulder loin and spare ribs are removed from a half-back block of a pork carcass is carried as a material. The operator cuts the circumference C of the bone head B5 and the constriction portion B6 of the meat block B with a knife and lightly lifts the bone head B5 and the constriction portion B6 to be exposed from the meat block B. This operation can be done with a light force and does not require skill. The pretreated meat block B is sequentially placed on the first conveyor 4 while the wrist side B1 faces the rear side of the bone removing device 1. The meat block B is carried downstream by the first conveyor 4.

In step S2, the operator grips the meat block B carried to the downstream side of the first conveyor 4 and places the constriction portion B6 exposed from the meat block B by the pretreatment on the horizontal guide bar 35. Then, as the meat block B is carried to the downstream side, as shown in Fig. 10, the constriction portion B6 slides into the gap between the first guide portion 34 and the second guide portion 36. At this time, the distance sensor 24 and the distance sensor 26 confirm whether the meat block B is guided in a normal posture. When an abnormal posture in which the meat block B is obliquely inclined with respect to the conveying direction is detected, the first conveyor 4 is stopped.

In step S3, when the distance sensor 24 confirms that the meat block B is carried in a normal posture, the second conveyor 6 is operated and the meat block B is conveyed to the downstream side at a conveying speed faster than that of the first conveyor 4 to be separated from the next meat block B. Here, each constriction portion B6 can be reliably gripped by the first grip portion 54 and the second grip portion 56 by increasing the distance between the meat blocks B.

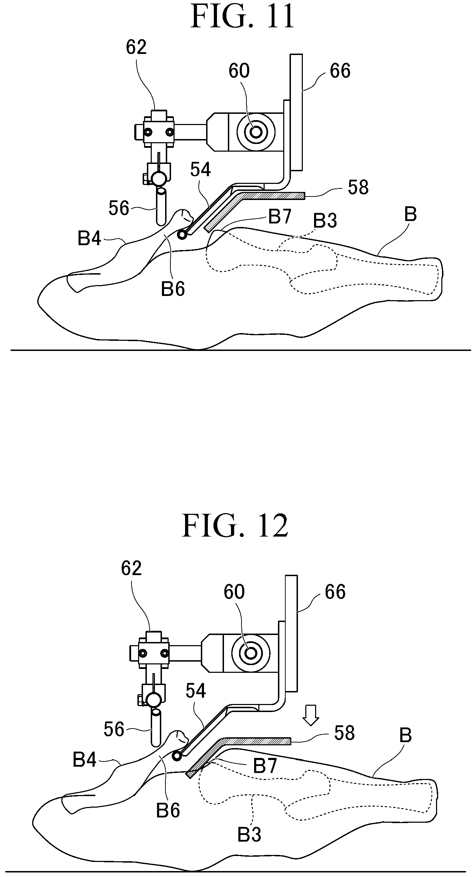

In step S4, when the passage sensor 28 confirms that the meat block B has passed, the third conveyor 8 is operated. Then, the constriction portion B6 moving along the first guide portion 34 and the second guide portion 36 slides into the gap between the first grip portion 54 and the second grip portion 56 and the constriction portion B6 moves to the downstream side while being guided by the first grip portion 54 and the second grip portion 56 as shown in Fig. 11. The distance sensor 30 confirms whether the meat block B has passed in a normal posture. When an abnormal posture in which the meat block B is obliquely inclined with respect to the conveying direction is detected, the third conveyor 8 is stopped. When there is no abnormality, the meat block B is moved to the center of the longitudinal direction of the first grip portion 54 and the third conveyor 8 is stopped at that position.

In step S5, the open-and-close actuator 64 is operated so that the second grip portion 56 approaches the first grip portion 54 and the constriction portion B6 is reliably gripped and fixed by the first grip portion 54 and the second grip portion 56.

In step S6, as shown in Fig. 12, the servo motor 84 is operated so that the lifting body 78 falls, the pressing body 58 is lowered, particularly the bone head B7 of the humerus B3 is pressed by the pressing body 58, and the meat block B is pressed and fixed to the third conveyor 8. Since the pressing body 58 is pressed against the bone head B7, the meat block B can be effectively fixed without the pressing body 58 striking into the meat.

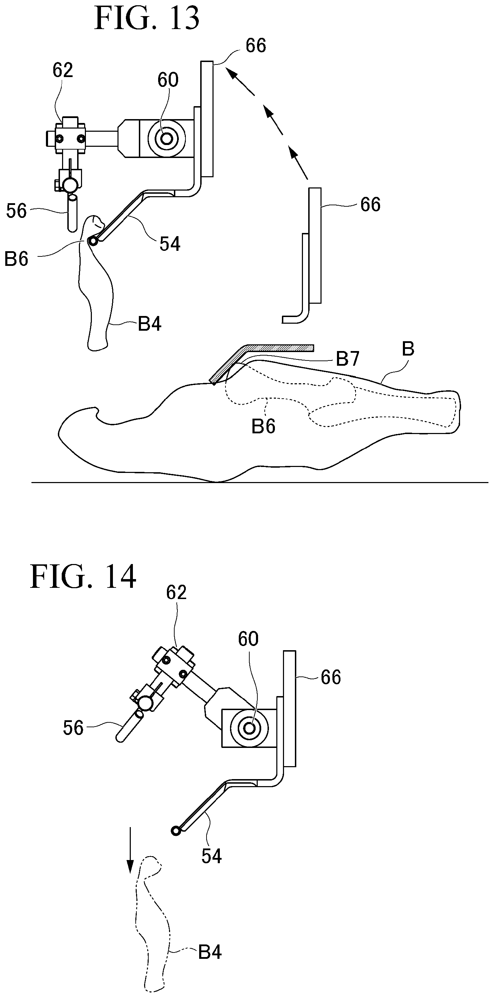

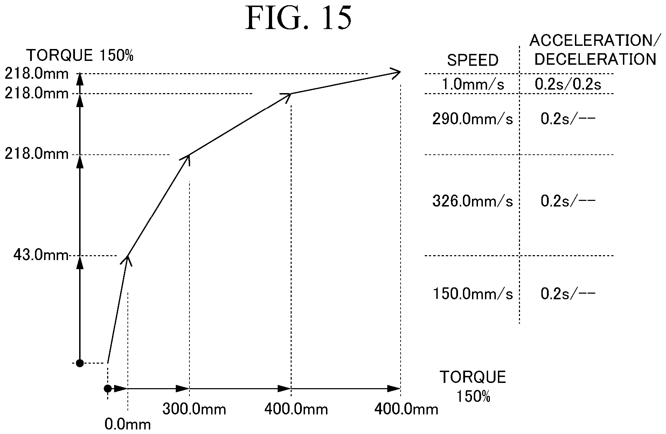

In step S7, as shown in Fig. 13, the vertical actuator 68 and the horizontal actuator 76 are operated so that the grip mechanism 12 is raised upward and is moved in a direction orthogonal to the conveyor conveying direction. Accordingly, the scapula B4 is peeled off from the meat block B and is lifted. At this time, since the grip mechanism 12 is moved in the moving direction and at the moving speed in which the movements of the vertical actuator 68 and the horizontal actuator 76 are combined as shown in Fig. 15, an efficient bone peeling operation according to the combination characteristics of the scapula B4 and the meat block B can be performed by setting each operation of the vertical actuator 68 and the horizontal actuator 76 to an optimal condition in advance. As a result, stable processing can be performed without damaging the meat by peeling the meat in an unreasonable direction or breaking the bones during peeling.

Fig. 15 is a graph showing operation conditions of the vertical actuator 68 and the horizontal actuator 76 in an example in which good peeling results are obtained in the test for various conditions by the present inventors. However, the present invention is not limited to this condition.

In step S8, as shown in Fig. 14, the open-and-close actuator 64 is operated to open the first grip portion 54 and the second grip portion 56 at a time point in which the scapula B4 suspended by the grip mechanism 12 reaches above the guide 14. Then, since the constriction portion B6 is released, the scapula B4 falls into the guide 14 (see Fig. 1) and is collected in a collection container (not shown).

In step S9, all of the pressing mechanism 82, the vertical actuator 68, and the horizontal actuator 76 are returned to the initial positions and the first grip portion 54 and the second grip portion 56 are returned to the original positions. The pressing body 58 is lifted up o release the meat block B and the third conveyor 8 is operated to carry the meat block B to the next step. Then, one cycle ends.

As described above, according to this bone removing device, since the constriction portion B6 of the bone in the meat block B is stably introduced into the gap between the first grip portion 54 and the second grip portion 56 in such a manner that the meat block B is placed and conveyed on the transfer mechanism (the first conveyor 4, the second conveyor 6, and the third conveyor 8), the bone removing operation can be stably performed even when the shape, size, and smoothness of the meat block B are different.

Further, since the constriction portion B6 is highly reliably and stably introduced into the gap between the first grip portion 54 and the second grip portion 56 by the guidance of the first guide portion 34 and the second guide portion 36, the bone removing operation can be more stably performed even when the shape and size of the meat block B and the softness of the muscles of the meat and bone are different.

Further, since the operation of the grip mechanism 12 is a moving direction, a moving speed, and a driving torque which are a combination of the ascent by the vertical actuator 68 and the horizontal movement in the conveyor width direction by the horizontal actuator 76, an efficient bone peeling operation according to the combination characteristics of the scapula B4 and the meat block B can be performed. As a result, stable processing can be performed without damaging the meat or breaking the bones during peeling.

Further, since the movement locus of the grip mechanism 12 in the virtual plane and the speed at each position can be programmed in advance by the control panel (controller), an efficient bone removing process can be performed according to the characteristics of the meat block. The control panel may include an input unit for inputting the shape or size of the meat block and may change the movement locus of the grip mechanism 12 in the virtual plane in response to the signal from the input unit. The signal from the input unit may be an output from a sensor that measures the shape or size of the meat block conveyed by the conveyor or a signal selected by a switch or the like switched by the determination of the operator.

Further, since the meat block B is pressed by the pressing body 58 when the scapula B4 is peeled off by the grip mechanism 12, the meat block B does not lift or change its posture when the scapula B4 is peeled off. As a result, there is an advantage that a stable peeling operation can be performed. Further, since the bone head B7 is pressed by the pressing body 58, an effective pressing operation can be performed.

Further, for example, even when the shape or size of the meat block is different beyond the allowable range, the heights of the first guide portion 34 and the first guide portion 34 can be adjusted by the lifting unit 40 and the heights of the first grip portion 54 and the second grip portion 56 can be adjusted by the vertical actuator 68. Accordingly, a stable bone removing operation can be performed even when the shape or size of the meat block is different in a wide range.

Further, since the constriction portion B6 is placed on the guide bar 35 and the constriction portion B6 is smoothly guided between the first guide portion 34 and the second guide portion 36, the bone removing operation can be more smoothly performed and the burden on the operator is small.

Further, since the conveying timing of the meat block B can be adjusted by the first conveyor 4, the delivery timing from the guide mechanism 10 to the grip mechanism 12 can be adjusted by the second conveyor 6, and the position and timing of the peeling operation can be adjusted by the third conveyor 8, it is easy to harmonize each operation at the optimum timing.

Further, for example, even when the thickness or size of the bone of the meat block is different beyond the allowable range, the adjustment mechanism of the arm 53 and/or the adjustment mechanism of the arm 62 is adjusted to adjust the gap between the first guide portion 34 and the second guide portion 36 and/or the gap between the first grip portion 54 and the second grip portion 56. Accordingly, even when the shape or size of the meat block is different in a wider range, a stable bone removing operation can be performed.

Further, the gap between the first guide portion 34 and the second guide portion 36 can be widened by turning the second guide portion 36 around the rotation shaft 46 in accordance with the operation of the handle 48 and the maintenance can be easily performed.

### INDUSTRIAL APPLICABILITY

According to the bone removing device and the bone removing method of the present invention, since there is an excellent effect that the bone removing operation can be stably performed even when the shape, size, and softness of the meat block are different, the present invention is applicable to the industries.

### REFERENCE SIGNS LIST

1: Bone removing device
2: Frame
4: First conveyor (part of transfer mechanism)
6: Second conveyor (part of transfer mechanism)
8: Third conveyor (part of transfer mechanism)
10: Guide mechanism
12: Grip mechanism
14: Guide
16: Drive mechanism
18: Support plate
2: Frame
20: Roller
22: Roller
24: Distance sensor
26: Distance sensor
28: Passage sensor
30: Distance sensor
32: Distance sensor
34: First guide portion
34A: Lower end
35: Guide bar
36: Second guide portion
38: Lifting plate
4: First conveyor
40: Lifting unit
42: Servo motor
44: Linear guide
45: Horizontal plate
46: Rotation shaft
48: Handle
50: Lever
52: Connection portion
53: Arm
54: First grip portion
54A: Lower end
56: Second grip portion
58: Pressing body
6: Second conveyor
60: Rotation shaft
62: Arm
64: Open-and-close actuator
66: Lifting plate
68: Vertical actuator
69: Servo motor
70: Linear guide
71: Horizontal frame
72: Slide stand
74: Linear guide
76: Horizontal actuator
77: Servo motor
78: Lifting body
8: Third conveyor
80: Linear guide
82: Pressing mechanism
84: Servo motor
B: Meat block
B1: Wrist side
B2: Forearm bone
B3: Humerus
B4: Scapula
B5: Bone head
B6: Constriction portion (portion to be gripped)
B7: Bone head

## Claims

1. A bone removing device (1) for removing a bone to be removed from a meat block, comprising:
a transfer mechanism (4, 6, 8) which transfers a meat block from an upstream side to a downstream side;
a grip mechanism (12) which includes first and second grip portions (54, 56) and an open-and-close actuator (64) opening and closing a gap between the first and second grip portions (54, 56) and introduces a part of the bone in the meat block into the gap between the first and second grip portions (54, 56); and
a drive mechanism (16) which moves the grip mechanism (12) so that the bone partially gripped by the grip mechanism (12) is peeled off from the meat block,
**characterized in that** the bone removing device (1) further comprises a guide mechanism (10) which includes first and second guide portions (34, 36) arranged along the transfer mechanism (4, 6, 8) with a gap therebetween and guides a part of the bone in the meat block conveyed by the transfer mechanism (4, 6, 8) to a gap between the first grip portions (54) and the second grip portions (56) through the gap.

2. The bone removing device (1) according to claim 1,
wherein the drive mechanism (16) includes a pressing mechanism (82) which includes a pressing body (58) disposed closer to the transfer mechanism (4, 6, 8) than the first grip portions (54) and the second grip portions (56) and a pressing actuator moving the pressing body (58) toward the transfer mechanism (4, 6, 8) and presses the meat block by the pressing body (58) when peeling off the bone from the meat block.

3. The bone removing device (1) according to claim 1 or 2,
wherein the drive mechanism (16) includes a vertical actuator (68) which moves the grip mechanism (12) in a direction perpendicular to a conveying surface of the transfer mechanism (4, 6, 8) and a horizontal actuator (76) which moves the grip mechanism (12) in a width direction of the transfer mechanism (4, 6, 8).

4. The bone removing device (1) according to claim 3,
wherein the drive mechanism (16) includes a controller which programs a movement locus of the grip mechanism (12) in a virtual plane orthogonal to a conveying direction of the transfer mechanism (4, 6, 8) in advance by controlling a moving speed of each of the vertical actuator (68) and the horizontal actuator (76).

5. The bone removing device according to claim 1, further comprising:
a guide position adjustment mechanism which adjusts a height of each of the first guide portion and the second guide portion from the transfer mechanism; and
a grip position adjustment mechanism which adjusts a height of each of the first grip portion and the second grip portion from the transfer mechanism.

6. The bone removing device (1) according to claim 1 or 5,
wherein the first guide portion (34) is located at a position closer to the transfer mechanism (4, 6, 8) than the second guide portion (36) and an upstream end of the first guide portion (34) is provided with a guide bar (35) extending toward an upstream side in relation to the second guide portion (36).

7. The bone removing device (1) according to any one of claims 1, 5 or 6,
wherein the transfer mechanism (4, 6, 8) includes a first conveyor (4), a second conveyor (6), and a third conveyor (8) which are arranged from an upstream side toward a downstream side and are respectively independently operable,
wherein the first guide portion (34) and the second guide portion (36) are arranged along the second conveyor (6), and
wherein the first grip portions (54) and the second grip portions (56) are arranged along the third conveyor (8).

8. The bone removing device (1) according to any one of claims 1, 5 to 7, further comprising:
a guide gap adjustment mechanism which adjusts a distance of a gap between the first guide portion (34) and the second guide portion (36); and
a grip gap adjustment mechanism which adjusts a distance of a gap between the first grip portions (54) and the second grip portions (56).

9. The bone removing device (1) according to any one of claims 1, 5 to 8, further comprising:
a guide turning mechanism (48) which includes a turning shaft (46) disposed in parallel to the first guide portion (34) and an arm supporting the second guide portion (36) to be turned around the turning shaft (46).

10. A bone removing method of removing a bone to be removed from a meat block, comprising:
conveying the meat block from an upstream side to a downstream side by a transfer mechanism (4, 6, 8) transferring the meat block;
introducing a part of the bone in the meat block into a gap between a first grip portions (54) and a second grip portions (56);
peeling off the bone from the meat block by moving the first grip portions (54) and the second grip portions (56) gripping the part of the bone in the gap;
guiding a part of the bone conveyed by the transfer mechanism (4, 6, 8) to the gap between the first grip portions (54) and the second grip portions (56) through a gap between a first guide portion (34) and a second guide portion (36) disposed along the transfer mechanism (4, 6, 8);

11. The bone removing method according to claim 10,
wherein the meat block is a pork shoulder meat, the bone is a scapula, and the part of the bone is a bone head of the scapula or a part just below the bone head.

## Patentansprüche

1. Knochenentfernungsvorrichtung (1) zum Entfernen eines aus einem Fleischblock zu entfernenden Knochens, die folgende Merkmale aufweist:
einen Transfermechanismus (4, 6, 8), der einen Fleischblock von einer vorgelagerten Seite zu einer nachgelagerten Seite transferiert;
einen Greifmechanismus (12), der erste und zweite Greifabschnitte (54, 56) und ein Öffnen-und-Schließen-Betätigungsglied (64) aufweist, das einen Spalt zwischen den ersten und zweiten Greifabschnitten (54, 56) öffnet und schließt und einen Teil des Knochens in dem Fleischblock in den Spalt zwischen den ersten und zweiten Greifabschnitten (54, 56) einführt; und
einen Antriebsmechanismus (16), der den Greifmechanismus (12) bewegt, so dass der durch den Greifmechanismus (12) teilweise ergriffene Knochen von dem Fleischblock abgezogen wird,
**dadurch gekennzeichnet, dass** die Knochenentfernungsvorrichtung (1) ferner einen Führungsmechanismus (10) aufweist, der erste und zweite Führungsabschnitte (34, 36) aufweist, die entlang des Transfermechanismus (4, 6, 8) mit einem Spalt dazwischen angeordnet sind, und einen Teil des Knochens in dem Fleischblock, der durch den Transfermechanismus (4, 6, 8) zu einem Spalt zwischen den ersten Greifabschnitten (54) und den zweiten Greifabschnitten (56) befördert wird, durch den Spalt führt.

2. Knochenentfernungsvorrichtung (1) gemäß Anspruch 1,
bei der der Antriebsmechanismus (16) einen Pressmechanismus (82) aufweist, der einen Presskörper (58), der näher an dem Transfermechanismus (4, 6, 8) angeordnet ist als die ersten Greifabschnitte (54) und die zweiten Greifabschnitte (56), und ein Pressbetätigungsglied aufweist, das den Presskörper (58) in Richtung des Transfermechanismus (4, 6, 8) bewegt und den Fleischblock durch den Presskörper (58) presst, wenn der Knochen von dem Fleischblock abgezogen wird.

3. Knochenentfernungsvorrichtung (1) gemäß Anspruch 1 oder 2,
bei der der Antriebsmechanismus (16) ein vertikales Betätigungsglied (68), das den Greifmechanismus (12) in einer Richtung senkrecht zu einer Förderoberfläche des Transfermechanismus (4, 6, 8) bewegt, und ein horizontales Betätigungsglied (76) aufweist, das den Greifmechanismus (12) in einer Breitenrichtung des Transfermechanismus (4, 6, 8) bewegt.

4. Knochenentfernungsvorrichtung (1) gemäß Anspruch 3,
bei der der Antriebsmechanismus (16) eine Steuerung aufweist, die einen Bewegungsort des Greifmechanismus (12) in einer virtuellen Ebene orthogonal zu einer Förderrichtung des Transfermechanismus (4, 6, 8) im Voraus programmiert durch Steuern einer Bewegungsgeschwindigkeit von jedem des vertikalen Betätigungsglieds (68) und des horizontalen Betätigungsglieds (76).

5. Knochenentfernungsvorrichtung gemäß Anspruch 1, die ferner folgende Merkmale aufweist:
einen Führungspositionseinstellmechanismus, der eine Höhe von jedem des ersten Führungsabschnitts und des zweiten Führungsabschnitts von dem Transfermechanismus einstellt; und
einen Greifpositionseinstellmechanismus, der eine Höhe von jedem des ersten Greifabschnitts und des zweiten Greifabschnitts von dem Transfermechanismus einstellt.

6. Knochenentfernungsvorrichtung (1) gemäß Anspruch 1 oder 5,
bei der der erste Führungsabschnitt (34) an einer Position näher an dem Transfermechanismus (4, 6, 8) als der zweite Führungsabschnitt (36) angeordnet ist und ein vorgelagertes Ende des ersten Führungsabschnitts (34) mit einer Führungsstange (35) versehen ist, die sich in Bezug auf den zweiten Führungsabschnitt (36) zu einer vorgelagerten Seite erstreckt.

7. Knochenentfernungsvorrichtung (1) gemäß einem der Ansprüche 1, 5 oder 6,
bei der der Transfermechanismus (4, 6, 8) einen ersten Förderer (4), einen zweiten Förderer (6) und einen dritten Förderer (8) aufweist, die von einer vorgelagerten Seite zu einer nachgelagerten Seite angeordnet sind und jeweils unabhängig betreibbar sind,
wobei der erste Führungsabschnitt (34) und der zweite Führungsabschnitt (36) entlang des zweiten Förderers (6) angeordnet sind und
wobei die ersten Greifabschnitte (54) und die zweiten Greifabschnitte (56) entlang des dritten Förderers (8) angeordnet sind.

8. Knochenentfernungsvorrichtung (1) gemäß einem der Ansprüche 1, 5 bis 7, die ferner folgende Merkmale aufweist:
einen Führungsspalteinstellmechanismus, der einen Abstand eines Spalts zwischen dem ersten Führungsabschnitt (34) und dem zweiten Führungsabschnitt (36) einstellt; und
einen Greifspalteinstellmechanismus, der einen Abstand eines Spalts zwischen den ersten Greifabschnitten (54) und den zweiten Greifabschnitten (56) einstellt.

9. Knochenentfernungsvorrichtung (1) gemäß einem der Ansprüche 1, 5 bis 8, die ferner folgendes Merkmal aufweist:
einen Führungsdrehmechanismus (48), der eine Drehwelle (46), die parallel zu dem ersten Führungsabschnitt (34) angeordnet ist, und einen Arm aufweist, der den zweiten Führungsabschnitt (36) trägt, um um die Drehwelle (46) gedreht zu werden.

10. Knochenentfernungsverfahren zum Entfernen eines aus einem Fleischblock zu entfernenden Knochens, das folgende Schritte aufweist:
Fördern des Fleischblocks von einer vorgelagerten Seite zu einer nachgelagerten Seite durch einen Transfermechanismus (4, 6, 8), der den Fleischblock transferiert;
Einführen eines Teils des Knochens in dem Fleischblock in einen Spalt zwischen ersten Greifabschnitten (54) und zweiten Greifabschnitten (56);
Abziehen des Knochens von dem Fleischblock durch Bewegen der ersten Greifabschnitte (54) und der zweiten Greifabschnitte (56), die den Teil des Knochens in dem Spalt ergreifen;
Führen eines Teils des Knochens, der durch den Transfermechanismus (4, 6, 8) zu dem Spalt zwischen den ersten Greifabschnitten (54) und den zweiten Greifabschnitten (56) befördert wird, durch einen Spalt zwischen einem ersten Führungsabschnitt (34) und einem zweiten Führungsabschnitt (36), die entlang des Transfermechanismus (4, 6, 8) angeordnet sind.

11. Knochenentfernungsverfahren gemäß Anspruch 10,
bei dem der Fleischblock Schweineschulterfleisch ist, der Knochen ein Schulterblatt ist und der Teil des Knochens ein Knochenkopf des Schulterblatts oder ein Teil unmittelbar unter dem Knochenkopf ist.

## Revendications

1. Dispositif de retrait d'os (1) destiné à retirer un os à retirer d'un bloc de viande, comprenant :
un mécanisme de transfert (4, 6, 8) qui transfère un bloc de viande d'un côté amont vers un côté aval ;
un mécanisme de préhension (12) qui inclut des premières et secondes parties de préhension (54, 56) et un actionneur d'ouverture/fermeture (64) ouvrant et fermant un espace entre les premières et secondes parties de préhension (54, 56) et introduit une partie de l'os du bloc de viande dans l'espace entre les premières et secondes parties de préhension (54, 56) ; et
un mécanisme d'entraînement (16) qui déplace le mécanisme de préhension (12) de telle sorte que l'os partiellement saisi par le mécanisme de préhension (12) est détaché du bloc de viande,
**caractérisé en ce que** le dispositif de retrait d'os (1) comprend un mécanisme de guidage (10) qui inclut des première et seconde parties de guidage (34, 36) agencées le long du mécanisme de transfert (4, 6, 8) avec un espace entre celles-ci et guide une partie de l'os du bloc de viande transporté par le mécanisme de transfert (4, 6, 8) jusqu'à un espace entre les premières parties de préhension (54) et les secondes parties de préhension (56) à travers l'espace.

2. Dispositif de retrait d'os (1) selon la revendication 1,
dans lequel le mécanisme d'entraînement (16) inclut un mécanisme de pressage (82) qui inclut un corps de pressage (58) disposé plus près du mécanisme de transfert (4, 6, 8) que les premières parties de préhension (54) et les secondes parties de préhension (56) et un actionneur de pressage déplaçant le corps de pressage (58) vers le mécanisme de transfert (4, 6, 8) et presse le bloc de viande par le corps de pressage (58) lors du détachement de l'os du bloc de viande.

3. Dispositif de retrait d'os (1) selon la revendication 1 ou 2,
dans lequel le mécanisme d'entraînement (16) inclut un actionneur vertical (68) qui déplace le mécanisme de préhension (12) dans une direction perpendiculaire à une surface de transport du mécanisme de transfert (4, 6, 8) et un actionneur horizontal (76) qui déplace le mécanisme de préhension (12) dans une direction de largeur du mécanisme de transfert (4, 6, 8).

4. Dispositif de retrait d'os (1) selon la revendication 3,
dans lequel le mécanisme d'entraînement (16) inclut un dispositif de commande qui programme un lieu de déplacement du mécanisme de préhension (12) dans un plan virtuel orthogonal à une direction de transport du mécanisme de transfert (4, 6, 8) au préalable en commandant une vitesse de déplacement de chacun de l'actionneur vertical (68) et de l'actionneur horizontal (76).

5. Dispositif de retrait d'os selon la revendication 1, comprenant en outre :
un mécanisme de réglage de position de guidage qui règle une hauteur de chacune de la première partie de guidage et de la seconde partie de guidage depuis le mécanisme de transfert ; et
un mécanisme de réglage de position de préhension qui règle une hauteur de chacune de la première partie de guidage et de la seconde partie de guidage depuis le mécanisme de transfert.

6. Dispositif de retrait d'os (1) selon la revendication 1 ou 5,
dans lequel la première partie de guidage (34) est située à une position plus proche du mécanisme de transfert (4, 6, 8) que la seconde partie de guidage (36) et une extrémité amont de la première partie de guidage (34) est pourvue d'une barre de guidage (35) s'étendant vers un côté amont par rapport à la seconde partie de guidage (36).

7. Dispositif de retrait d'os (1) selon l'une quelconque des revendications 1, 5 ou 6,
dans lequel le mécanisme de transfert (4, 6, 8) inclut un premier transporteur (4), un deuxième transporteur (6) et un troisième transporteur (8) qui sont agencés depuis un côté amont vers un côté aval et peuvent respectivement fonctionner indépendamment,
dans lequel la première partie de guidage (34) et la seconde partie de guidage (36) sont agencées le long du deuxième transporteur (6), et
dans lequel les premières parties de préhension (54) et les secondes parties de préhension (56) sont agencées le long du troisième transporteur (8).

8. Dispositif de retrait d'os (1) selon l'une quelconque des revendications 1, 5 à 7, comprenant en outre :
un mécanisme de réglage d'espace de guidage qui règle une distance d'un espace entre la première partie de guidage (34) et la seconde partie de guidage (36) ; et
un mécanisme de réglage d'espace de préhension qui règle une distance d'un espace entre les premières parties de préhension (54) et les secondes parties de préhension (56).

9. Dispositif de retrait d'os (1) selon l'une quelconque des revendications 1, 5 à 8, comprenant en outre :
un mécanisme de rotation de guidage (48) qui inclut un arbre de rotation (46) disposé parallèlement à la première partie de guidage (34) et un bras supportant la seconde partie de guidage (36) pour tourner autour de l'arbre de rotation (46).

10. Procédé de retrait d'os consistant à retirer un os à retirer d'un bloc de viande, comprenant le fait de :
transporter le bloc de viande depuis un côté amont vers un côté aval par un mécanisme de transfert (4, 6, 8) transférant le bloc de viande ;
introduire une partie de l'os du bloc de viande dans un espace entre les premières parties de préhension (54) et les secondes parties de préhension (56) ;
détacher l'os du bloc de viande en déplaçant les premières parties de préhension (54) et les secondes parties de préhension (56) saisissant la partie de l'os dans l'espace ;
guider une partie de l'os transporté par le mécanisme de transfert (4, 6, 8) jusqu'à l'espace entre les premières parties de préhension (54) et les secondes parties de préhension (56) à travers un espace entre une première partie de guidage (34) et une seconde partie de guidage (36) disposées le long du mécanisme de transfert (4, 6, 8).

11. Procédé de retrait d'os selon la revendication 10,
dans lequel le bloc de viande est une viande d'épaule de porc, l'os est une omoplate, et la partie de l'os est une tête d'os de l'omoplate ou une partie située juste sous la tête d'os.
